# EUROPÄISCHE PATENTANMELDUNG

(11) **EP 4 353 491 A1**
(43) Veröffentlichungstag der Anmeldung: **17.04.2024**
(21) Anmeldenummer: 22819605.1
(22) Anmeldetag: 09.06.2022
(51) Int. Cl.: B60B 3/04, B60B 21/02, B21D 53/30, C21D 9/34

(54) **RAD AUS ULTRALEICHTEM STAHL FÜR NUTZFAHRZEUGE**

(30) Priorität: 10.06.2021 CN 202110648441
(71) Anmelder: Thyssenkrupp Steel (Beijing) Co., Ltd., Beijing 100020 (CN); ThyssenKrupp Steel Europe AG, 47166 Duisburg (DE)
(72) Erfinder: PIERONEK, David, Beijing 100020 (CN); TIAN, Wei, Beijing 100020 (CN)
(74) Vertreter: ThyssenKrupp Steel Europe AG
(86) Internationale Anmeldenummer: PCT/CN2022/097843
(87) Internationale Veröffentlichungsnummer: WO 2022/258008

(57) **Zusammenfassung**

Die vorliegende Anmeldung betrifft ein ultraleichtgewichtiges Stahlrad (1) für ein Nutzfahrzeug. Das Rad weist exzellente Materialcharakteristika und ein fortschrittliches Design auf, und besteht aus einer Felge (2) zum Montieren eines Reifens, und einer Schüssel (3), die einen Nabenflansch (5) zum lösbaren Verbinden mit einer Radnabe oder einer Achse eines Fahrzeugs aufweist, wobei die Felge (2) und/oder die Schüssel (3) aus einem wärmebehandelten und gehärteten Stahlmaterial mit einem Kohlenstoffgehalt zwischen 0,18 Gew.-% und 0,37 Gew.-% hergestellt ist bzw. sind, und die Schüssel (3) und/oder die Felge (2) vorwiegend aus einer martensitischen Mikrostruktur besteht bzw. bestehen und eine Zugfestigkeit von mindestens 900 MPa aufweist bzw. aufweisen, dadurch gekennzeichnet, dass die maximale Dicke (T3) der Felge (2) kleiner als 4,50 mm und/oder die maximale Dicke (T1) der Schüssel (3) kleiner als 12,00 mm ist bzw. sind, wobei der Wert des Produkts aus dem Raddurchmesser (D) und der Radbreite (W) geteilt durch die Radmasse größer als 4000 mm²/kg ist.

## Beschreibung

### Technisches Gebiet

Die vorliegende Anmeldung betrifft ein ultraleichtgewichtiges Stahlrad für ein Nutzfahrzeug, wobei das Rad exzellente Materialcharakteristika und ein fortschrittliches Design aufweist. Das Rad ist aus einer Felge zum Montieren eines Reifens und einer Schüssel, die einen Nabenflansch zum lösbaren Verbinden mit einer Radnabe oder Achse aufweist, ausgebildet, wobei die Felge und/oder die Schüssel aus einem wärmebehandelten und gehärteten Stahlmaterial mit einem Kohlenstoffgehalt von 0,18 Gew.-% bis 0,37 Gew.-% hergestellt werden, und die Schüssel und/oder die Felge vorwiegend aus einer martensitischen Mikrostruktur bestehen und eine Zugfestigkeit von mindestens 900 MPa aufweisen.

### Stand der Technik

Standardstahlräder für Nutzfahrzeuge (Nfz) wie etwa Lastwagen, Busse und Anhänger werden aus einer einstückigen Radschüssel und einer einstückigen Felge ausgebildet, die permanent fest miteinander verbunden werden. Die Radfelge bildet einen peripheren Teil des Rads und wird somit zum Halten eines Reifens mit oder ohne einen inneren Schlauch verwendet. Die Radschüssel weist einen Nabenflansch zum lösbaren Verbinden mit einer Radnabe eines Fahrzeugs auf. Während der letzten paar Dekaden wurden Kaltumformungsprozesse zum Herstellen von Radschüssel und -felgen in Chargen aus Flachstahlmaterial verwendet. Das allgemein verwendete Stahlmaterial ist ein unlegierter Stahl, Baustahl oder mikrolegierter feinkörniger Baustahl mit einem Kohlenstoffgehalt von weniger als 0,18 Gew.-% und/oder einer Zugfestigkeit (Rₘ) kleiner als 700 MPa (z. B. HR 420/S420 MC). Die Hauptanforderung für Nutzfahrzeugräder besteht darin, dass sie eine maximale Ermüdungslebensdauer, Sicherheit und Festigkeit mit minimalem Gewicht und minimalen Kosten aufweisen.

Maßnahmen zum Reduzieren des Gewichts von Nutzfahrzeugen haben eine direkte Auswirkung auf den gesamten Kraftstoff-/Energieverbrauch, Nachhaltigkeit und Nutzlastzunahme, und aufgrund der Tatsache, dass sich die Räder auch drehen, ist deren Qualität ein wichtiger Einflussfaktor. Zusätzlich zu ständig ansteigenden CO₂-Emissionen sowie strikten Vorschriften, suchen OEM aktuell nach nachhaltigen und kostengünstigen Gewichtsreduktionslösungen für Komponenten von Güterfahrzeugen und Autos.

Ein bekanntes Verfahren zur Reduktion von Radgewicht besteht darin, die Dicke von Komponenten lokal zu reduzieren; die Gesamtleistungsfähigkeit verbleibt unbeeinträchtigt und kann weiter die Anforderungen erfüllen. Beispielsweise ist die Dicke des Nabenflansches der Schüssel etwa zweimal die einer konischen Radschüsselregion oder eines äußeren Flansches zum Fügen an die Felge. Lokale und graduelle Dickenreduktion kann durch Drücken/Drückumformen der Schüssel und/oder der Felge erreicht werden; dies sind reale Beispiele, die in den internationalen Patentanmeldungen WO 2015/159231 A1 (für Schüssel) und WO 2018/051282 A1 (für Felgen) offenbart sind.

Ein weiteres Verfahren zum Erreichen von Gewichtsreduktion besteht darin, ein Stahlmaterial mit höherer Festigkeit, wie z. B. in dem Patent CN 103909381 B1 offenbart, zu verwenden. Im Allgemeinen ist eine Begleiterscheinung von hochfestem Stahl ein Einbrechen der Umformbarkeits- und Verarbeitungscharakteristika, was es schwierig macht, das Potential von Gewichtsreduktion voll auszureizen. Zusätzlich wird eine höhere Materialfestigkeit nicht automatisch mit höherer Ermüdungsleistungsfähigkeit und Sicherheit in Zusammenhang gebracht, und dies ist ein Schlüsselfaktor beim Befähigen innovativer Stahlräder, deren Gewicht weiter zu reduzieren.

Das durch die vorliegende Anmeldung zu lösende Problem besteht darin, ein ultraleichtgewichtiges und kosteneffizientes Stahlrad für ein Nutzfahrzeug bereitzustellen; im Vergleich mit dem bekannten Stand der Technik kann das Stahlrad mit optimaler Ermüdungsleistungsfähigkeit, Sicherheit und optimalem Gewicht designt werden.

### Kurzdarstellung der Erfindung

Gemäß der vorliegenden Erfindung kann das oben erwähnte Problem aufgrund der folgenden Merkmale gelöst werden, wobei die maximale Dicke der Felge kleiner oder gleich 4,50 mm und/oder die maximale Dicke der Schüssel kleiner oder gleich 12,00 mm ist, wobei der Wert des Produkts aus dem Raddurchmesser und der Radbreite geteilt durch die Radmasse größer als 4000 mm²/kg ist, bevorzugt größer als 4400 mm²/kg ist und insbesondere größer als 4600 mm²/kg ist.

Durch umfassende Forschung auf der Grundlage von Ermüdungstesten von speziellen Biegetestproben von verschiedenen Stahlarten haben die Erfinder überraschenderweise entdeckt, dass ein Stahlmaterial, das vorwiegend aus einer martensitischen Mikrostruktur besteht und eine spezifische chemische Zusammensetzung aufweist, wesentlich verbesserte Ermüdungsleistungsfähigkeit unter zyklischen Biegelasten aufzeigte, und dies ist insbesondere für Radanwendungen vorteilhaft. Die Aufgabe eines spezifischen alternativen Tests (Probestreifen) bestand darin, den ungleichmäßigen Spannungszustand eines Rads während Biegeermüdungstesten zu reproduzieren. Während Ermüdungstesten wurde ein Ende einer spezifischen Probe in einer Messeinrichtung eingeklemmt und das entgegengesetzte freie Ende wurde einer sinusförmigen Last (Wechsellast) ausgesetzt. Ein relevantes alternatives Testverfahren für Räder ist in dem Patent EP 3 115 767 B1 offenbart.

Auf der Grundlage der Testresultate zeigt Tabelle 1 beispielhafte Auszüge; und ein vorteilhaftes Stahlmaterial wurde festgestellt, dessen durchschnittliche zyklische Biegeermüdungfestigkeit mindestens dreimal höher als die von Standardstahl (z. B. HR 420), der für Nutzfahrzeugräder verwendet wird, war. Zusätzlich war, im Vergleich mit vorteilhaftem Stahlmaterial A, die Ermüdungsleistungsfähigkeit von wärmebehandelten und gehärteten Stahlmaterialien B und C signifikant reduziert, womit auch bewiesen wurde, dass eine Zunahme der Materialfestigkeit und/oder des Kohlenstoffgehalts nicht automatisch direkt zu besserem Ermüdungsverhalten führen wird. Darüber hinaus können zusätzliche Eigenschaften von wärmebehandelten und gehärteten Stahlmaterialien durch spezifische Oberflächenbehandlung verbessert werden.

**Tabelle 1**

| **Material** | **C** | **Si** | **Mn** | **Cr** | **Mo** | **Biegeermüdung** |
|---|---|---|---|---|---|---|
| HR 420 | 0,11 | 0,1 | 1,52 | - | - | 440 MPa |
| Stahl A | 0,22 | 0,21 | 1,22 | 0,08 | - | 1470 MPa |
| Stahl B | 0,38 | 0,39 | 0,78 | 0,92 | 0,24 | 950 MPa |
| Stahl C | 0,45 | 0,41 | 0,62 | 0,31 | 0,08 | 900 MPa |

Der zweite Teil der vorliegenden Anmeldung betrifft die Verwendung bestimmter Materialcharakteristika und gemessener vorteilhafter Spannungsbedingungen, um neuartige Designs von leichtgewichtigen Stahlrädern von Durchmesser 420 mm - 600 mm und Breite 175 mm - 300 mm zu entwickeln und herzustellen. Man kann durch tiefgreifende, simulationsbasierte Arbeit und nachfolgende Prototypentests feststellen, dass, wenn der Wert des Produkts des Raddurchmessers und der Radbreite geteilt durch die Radmasse größer als 4000 mm²/kg ist, bevorzugt größer als 4400 mm²/kg ist und insbesondere größer als 4600 mm²/kg ist, die Leistungsfähigkeit des Stahlrads gemäß der vorliegenden Anmeldung besonders vorteilhaft ist. Darüber hinaus übersteigt der Wert des Produkts der maximalen Dicke der Felge und der maximalen Dicke der Schüssel 56 mm² nicht und übersteigt bevorzugt nicht 50 mm². insbesondere sollte die maximale Dicke der Felge kleiner oder gleich 4,50 mm sein und/oder sollte die maximale Dicke der Schüssel kleiner oder gleich 12,00 mm sein. Somit kann das Gewicht des entwickelten Rads signifikant reduziert und dessen Trägheitsmoment herabgesetzt werden, während Ermüdungsfestigkeits- und Sicherheitsanforderungen machbar bleiben.

Gemäß den (beispielsweise) in ETRTO, T&RA und DIN definierten Normen, werden die Radbreite und -durchmesser in der Region von Reifenwulstsitz zu Reifenwulstsitz gemessen. Die Gesamtmasse des Stahlrads wird als die Radmasse gemessen; der Reifen wird nicht berücksichtigt. Die maximale Dicke der Schüssel befindet sich im Allgemeinen an dem Nabenflansch, d. h. in der Region, in der das Rad an der Nabe oder der Achse (mit Bolzen) befestigt wird, und die minimale Schüsseldicke befindet sich im Allgemeinen in einer konischen Region und/oder einer Region in Kontakt mit der Felge. In Allgemeinen wird die maximale Dicke der Felge am Felgenbett einer Bettfelge und/oder einer Fügeregion und/oder einem Felgenhorn, das sich in direktem Kontakt mit dem Reifen befindet und somit höchste lokale Spannungskonzentration aushalten muss, erhalten.

Um die Spannungsverteilung des offenbarten Stahlrads geeignet auszubalancieren und dadurch das Gewicht auf das maximale Maß zu reduzieren, ist es sehr wichtig, dass der festgelegte Wert der Maximaldickenkombination der Felge 56 mm², bevorzugt 50 mm² beträgt. Ein sensibler Wert für die Maximaldickenkombination sollte 15 mm², bevorzugt 20 mm² übersteigen. Es fand sich bereits, dass das Potential von Gewichtsreduktion nicht voll ausgereizt werden kann, wenn der Wert der Maximaldickenkombination größer als 56 mm² ist, und in manchen Anwendungen und Designs führt dies sogar zu schlechter Leistungsfähigkeit. Dies liegt am fehlerhaften Ausgleich, die Steifigkeit und das Deformationsverhalten des Rads zwischen der Nabe und dem Reifen geeignet auszubalancieren, so dass eine hohe lokale Spannungskonzentration in dem Stahlrad eingeführt wird, was zu Überlastung und frühem Versagen führt. Durch Begrenzen der maximalen Felgendicke auf höchstens 4,50 mm und der maximalen Schüsseldicke auf höchstens 12,00 mm wird das optimale Leistungsfähigkeitsergebnis erreicht. Somit sollten, gemäß der neuen Entdeckung der vorliegenden Anmeldung, die maximalen Dickenproportionen der Felge und der Schüssel auf den offenbarten Bereich und Erfüllen der Normen begrenzt werden.

Zusätzlich sollte die Felgendicke an irgendeiner Position nicht weniger als eine minimale Dicke von 1,5 mm sein, ist bevorzugt nicht weniger als 2,0 mm und insbesondere nicht weniger als 2,5 mm, um somit zu gewährleisten, dass der Felgenteil hinreichende lokale Steifigkeit und Festigkeit aufweist. Zusätzlich sollte die minimale Dicke der Schüssel nicht weniger als 6,00 mm sein und ist bevorzugt nicht weniger als 7,5 mm in der Region des Nabenflansches und in der konischen Region, nicht weniger als 2,0 mm, bevorzugt nicht weniger als 2,5 mm und insbesondere nicht weniger als 3,0 mm, um somit unerwünschte Spannungslokalisierung in der Schüssel zu vermeiden und dadurch frühe Risseinleitung und Versagen der ganzen Komponente zu verhindern.

Um die Spannungsverteilung in der Fügeregion der Schüssel und der Felge weiter zu optimieren, fand sich, dass, wenn der Wert des Produkts der maximalen Felgendicke in der konischen Region und/oder der Kontaktregion und der minimalen Dicke 30 mm² nicht übersteigt, das lokale Spannungsniveau reduziert und homogenisiert werden kann. Ansonsten wird die Steifigkeit der Fügeverbindung zu hoch, was zu dem Einsetzen von hoher Spannungskonzentration in der Nähe der Kontaktregion führt, was zu einem frühen Versagen der martensitischen Mikrostruktur führen kann, die in der Endkomponente (der Schüssel und/oder der Felge) dominiert, wodurch die Gesamtleistungsfähigkeit des offenbarten Rads verringert wird. Ein sensibler Wert des Produkts der maximalen Dicke der Felge und der minimalen Dicke des Schüssel in der Kontaktregion sollte 7 mm² übersteigen.

Gemäß einer weiteren Ausführungsform des Nutzfahrzeug-Stahlrads der vorliegenden Anmeldung sind die Schüssel und die Felge verpresst und zusätzlich durch Schweißen, Hartlöten, Bonden oder eine andere Fügetechnik befestigt. Verpressen führt zu einer Verdopplung von Material in der Kontaktregion und Überlappen der Felge und der Scheibe. Die Gesamtdicke des Überdeckungsstoßes in der Kontaktregion sollte kleiner als 11,0 mm, bevorzugt kleiner als 9,5 mm sein, um zu gewährleisten, dass Spannung vorteilhafterweise in die anderen Komponenten übertragen wird. Man fand bereits, dass, wenn die Gesamtdicke des Überlappstoßes größer als 11,0 mm ist, der unangemessene Übergang an Steifigkeit hauptsächlich frühes Versagen in der Nähe der Schweißregion verursacht und somit zu einem Komplettversagen des gesamten Rads führt. Andererseits sollte die Gesamtdicke 5 mm übersteigen, um somit zu gewährleisten, dass die Fügeverbindung angemessene Ermüdungs- und Steifigkeitsleistung aufweist.

Während des Zusammenbaus werden thermische Fügetechniken zusätzliche Wärme in die Endkomponente (Schüssel/Felge) einführen und können die Materialcharakteristika von wärmebehandeltem und gehärtetem Stahl, der vorwiegend aus einer martensitischen Mikrostruktur besteht, beeinträchtigen/abändern. Gemäß den offenbarten Designkriterien ist eine thermische Auswirkungsregion mit einer lokalen Härte von weniger als 350 HV 0,1 und ein Radius von 25 mm um eine Schweißregion der Kontaktregion herum akzeptabel, unter der Bedingung, dass Verpressen und eine zusätzliche Fügetechnik verwendet werden. Wenn die Radschüssel darüber hinaus zusätzlich ein Inspektionsloch aufweist, ist die Härte in der Nähe von dessen Kante nicht geringer als 350 HV 0,1, womit eine zusätzliche Leistungsfähigkeitsverbesserung erreicht werden kann.

Gemäß einer weiteren Ausführungsform des Nutzfahrzeug-Stahlrads der vorliegenden Anmeldung ist der wärmebehandelte und gehärtete Stahl Borstahl oder Mangan-Bor-Stahl und die Mikrostruktur des wärmebehandelten und gehärteten Stahls in der Schüssel und/oder der Felge besteht vorwiegend aus Martensit; bevorzugt besteht mehr als 80 % und insbesondere mehr als 90 % der Mikrostruktur aus Martensit. Wärmebehandelbarer Stahl, wie etwa 17MnB3, 20MnB5, 22MnB5, 30MnB5 oder 34MnB5 ist für einen Härteprozess geeignet und wird als ein Werkstück bei der Herstellung der Felge und/oder der Schüssel verwendet, wobei die erforderliche Leistungsfähigkeit und optimale Leistungsfähigkeit während Biegeermüdungstesten der Stahlprobe und nachfolgendem Radprototypentesten gezeigt wird. Im Vergleich mit dem Konzept von herkömmlich verwendetem Stahl weist der oben erwähnte Stahl eine höhere zyklische Biegeermüdungfestigkeit auf, die insbesondere die Nutzungslebensdauer der entsprechenden Komponente verlängern kann und vorzeitiges Materialversagen in einem sehr großen Maße verhindern kann.

Gemäß einer weiteren Ausführungsform des Nutzfahrzeug-Stahlrads der vorliegenden Anmeldung wird ein indirekter Heißpräge- oder Presshärtungsprozess zum Herstellen des wärmebehandelten und gehärteten Stahlmaterials, das vorwiegend aus einer martensitischen Mikrostruktur in der Endkomponente (Schüssel und/oder Felge) besteht, verwendet.

Gemäß einer weiteren Ausführungsform des Nutzfahrzeug-Stahlrads der vorliegenden Anmeldung liegt die mittlere Oberflächenrauhigkeit Ra der wärmebehandelten und gehärteten Schüssel und/oder Felge zwischen 0,8 µm und 1,8 µm. Insbesondere wird die Oberfläche der wärmebehandelten und gehärteten Schüssel und/oder Felge mechanischer Bearbeitung unterzogen, beispielsweise durch Kugelstrahlen oder Kugelstrahlhärten, wodurch die Oberflächenqualität der Endkomponente (Schüssel und/oder Felge), die vorwiegend aus einer martensitischen Mikrostruktur besteht, verbessert wird.

Gemäß einer Ausführungsform des Nutzfahrzeug-Stahlrads der vorliegenden Anmeldung werden die Felge und die Schüssel aus wärmebehandeltem und gehärtetem Stahl hergestellt, wobei die Felge und die Schüssel vorwiegend aus einer martensitischen Mikrostruktur bestehen und eine Zugfestigkeit von mindestens 900 MPa aufweisen. Darüber hinaus ist/sind die durchschnittliche Zugfestigkeit und/oder Härte der Nabenflanschregion der Schüssel kleiner als die durchschnittliche Zugfestigkeit und/oder Härte der konischen Region und/oder Kontaktregion des Schüssel.

Gemäß einer optionalen Ausführungsform des Nutzfahrzeug-Stahlrads der vorliegenden Anmeldung ist die Felge aus wärmebehandeltem und gehärtetem Stahl hergestellt, der vorwiegend aus einer martensitischen Mikrostruktur besteht und eine Zugfestigkeit von mindestens 900 MPa aufweist; die Schüssel ist aus einem anderen Stahlmaterial hergestellt, das ein kaltumgeformtes Stahlmaterial ist und keiner Wärmebehandlung und Härtung unterzogen wurde. Die Schüssel wird aus einem Stahlmaterial mit einem Kohlenstoffgehalt von weniger als 0,22 Gew.-%, insbesondere weniger als 0,20 Gew.% und bevorzugt weniger als 0,18 Gew.%, insbesondere einem mikrolegierten feinkörnigen Baustahl, wie etwa HR 420, HQ 420, S420MC, S460MC, HR 500, HR 550, HQ 600 MC, HR 700, HR 760 oder einer höheren Qualitätsstufe, hergestellt. Alternativ kann auch Baustahl verwendet werden, wie etwa S235, S275 oder S355; unlegierter Stahl kann auch verwendet werden, wie etwa DD11; und Mehrphasenstahl kann auch verwendet werden, wie etwa Ferrit-Bainit-Zweiphasenstahl oder Bainitstahl. In der Mikrostruktur des Stahlmaterials der Schüssel als die Endkomponente und der kaltumgeformten Schüssel ist der Martensitgehalt kleiner als 40 %, insbesondere kleiner als 20 % und bevorzugt kleiner als 5 % (einschließlich 0 %). Insbesondere ist die Zugfestigkeit des Nabenflansches genauer niedriger als 900 MPa. Die Dicke wird durch Drücken reduziert, so dass die Materialfestigkeit der konischen Region der endgültigen Schüssel im Allgemeinen relativ zu dem Nabenflansch erhöht ist.

### Kurze Beschreibung der Zeichnungen

Die vorliegende Anmeldung ist nachstehend unter Zuhilfenahme der Zeichnungen, die Musterausführungsformen beschreiben, ausführlicher beschrieben. In den Zeichnungen weisen identische Komponenten identische Bezugszeichen auf.
Figur 1 zeigt eine Musterausführungsform, die eine schematische Schnittansicht eines Nutzfahrzeug-Stahlrads gemäß der vorliegenden Anmeldung zeigt.
Figur 2 zeigt eine Mikrographie durch eine Füge- und Kontaktregion zwischen einer Felge und einer Schüssel.

### Ausführliche Beschreibung der Erfindung

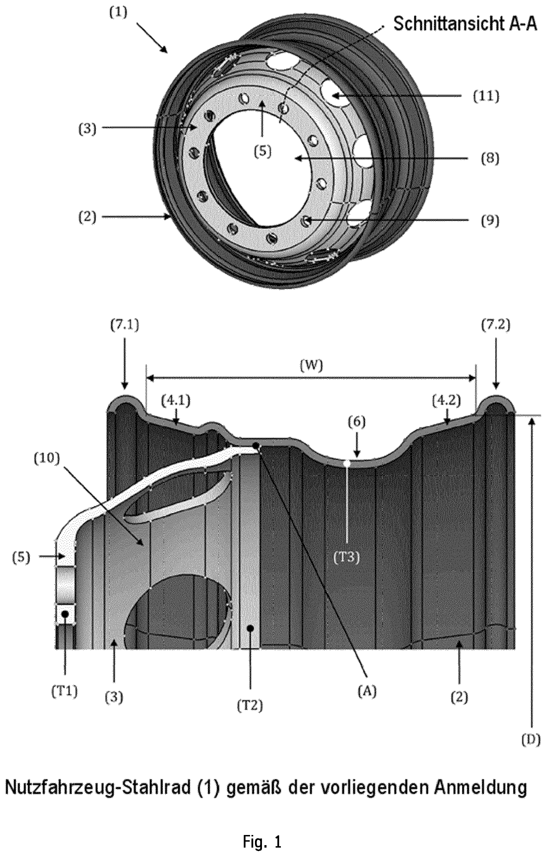

Figur 1 zeigt eine Schnittansicht durch eine Ausführungsform eines Nutzfahrzeug-Stahlrads (1) gemäß der vorliegenden Anmeldung. Das Nutzfahrzeugrad (1) umfasst: eine gerillte Felge (2) mit einem (beispielsweise) 15°-Reifenwulstsitz zum Halten eines schlauchlosen Reifens (wobei der Reifen nicht gezeigt ist); und eine Schüssel (3), verbunden mit der Felge (2). Das gezeigte Nutzfahrzeugrad weist einen Durchmesser (D) von 572 mm und eine Breite (W) von 229 mm auf und ist als ein Lastwagenrad mit Abmessungen von 22,5 x 9,00 und einer maximalen Radlast von 4000 kg designt.

Die Schüssel (3) ist schüsselförmig, umfasst vorwiegend eine planare Nabenflanschregion (5) und eine konische Region (10); wobei die Nabenflanschregion (5) ein zentrales Loch (8) und Bolzenlöcher (9) zum lösbaren Verbinden mit einer Nabe aufweist, die konische Region (10) weist Belüftungslöcher oder Inspektionslöcher (11) auf, wobei die konische Region (10) an einer Fügeregion (A) eines Außendurchmessers und der Felge (2) endet. Die Schüssel (3) ist durch Drücken als ein einziges Stück ausgebildet und weist verschiedene Dicken auf, wobei sich eine maximale Tiefe (T1) in der Nabenflanschregion (5) befindet und 11,0 mm erreicht.

Die Dicke der konischen Region (10) variiert radial, mit einer minimalen Dicke von 4,0 mm (T2). Die Schüssel (3) ist aus Mangan-Bor-Stahl, insbesondere 30MnB5 gebildet. Nach dem Drücken und Nachbehandlungsoperationen (z. B. Schneiden), durchläuft die Schüssel (3) Wärmebehandlung und Härten, um Dominanz einer martensitischen Mikrostruktur in der Endkomponente zu erreichen. Nach Wärmebehandlung und Härten ist die Festigkeit der Schüssel (3) größer als 1400 MPa (Rm), insbesondere in der konischen Region (10).

Die Felge (2) ist ringförmig, mit einer 3,7 mm erreichenden Gesamtdicke (T3); die maximale Felgendicke ist auch 3,7 mm. Die Felge (2) ist auch aus Mangan-Bor-Stahl, insbesondere 20MnB5, gebildet. Nach Ausbilden der ringförmigen Gestalt und Ausformen, durchläuft die Felge (2) auch Wärmebehandlung und Härten, um eine vollkommen martensitische Mikrostruktur in der Endkomponente zu erreichen. Nach der Wärmebehandlung ist die Materialfestigkeit der Felge (2) größer als 1200 MPa (Rm).

Die Schüssel (3) und die Felge (2) sind durch Verpressen und Laserschweißen zusammengefügt. Die Gesamtdicke (O) des Überlappstoßes ist 7,7 mm, und ist somit kleiner als die maximal zulässige Dicke von 11,0 mm. Auf der Grundlage der Designdicke aller Komponenten werden alle definierten Dickenproportionen erfüllt. Das Produkt aus der maximalen Felgendicke (T3) und der minimalen Schüsseldicke (T2) erreicht 14,8 mm², was weniger als der definierte Wert von 30 mm² ist. Das Produkt von Dicken (T1) und (T3) ist gleich 40,7 mm², was weniger als der definierte Wert von 56 mm² ist, und insbesondere weniger als der definierte Wert von 50 mm² ist. Die Gesamtradmasse beträgt etwa 26 kg, somit ist der Schlüsselleistungsfaktor des designten Rads 5038 mm²/kg, was offensichtlich größer als die Erforderlichen 4000 mm²/kg ist.

Im Vergleich ist das Gewicht eines Nutzfahrzeug-Stahlrads im Stand der Technik, in einem vergleichbaren Zustand und mit denselben Abmessungen und derselben Radlast, etwa 36 kg. Die maximale Felgendicke ist größer als 4,5 mm und die maximale Dicke der Schüssel in dem Nabenflansch ist im Allgemeinen größer als 12,0 mm. Somit kann ein Standardrad nicht alle der Anforderungen des offenbarten Rads erfüllen.

Um das Gewicht weiter zu reduzieren, ist es auch möglich, einen Drückprozess auf die Felge (2) anstatt der Schüssel (3) allein anzuwenden und die Dickenverteilung entlang der Felgenbreite vor dem Wärmebehandlungs- und Härtungsprozess zu optimieren.

Gemäß einer weiteren Lösung der Ausführungsformen ist die Felge (2) aus Mangan-Bor-Stahl, insbesondere 22MnB5, hergestellt und die Schüssel (3) ist aus einem Stahlmaterial mit einem Kohlenstoffgehalt kleiner als 0,18 Gew.-% hergestellt; dieses Stahlmaterial durchläuft eine Kaltumformung, durchläuft allerdings keine Wärmebehandlung und Härtung, und ist insbesondere beispielsweise ein mikrolegierter feinkörniger Baustahl, insbesondere S 550 MC. Die Felgendicke (T3) erreicht 3,50 mm, die maximale Dicke (T1) der Schüssel (3) in dem Nabenflansch (5) erreicht 12 mm, und die minimale Dicke (T2) der Schüssel (3) in der konischen Region (10) erreicht 6,00 mm. Die Felge (2) allein durchläuft zusätzliche Wärmebehandlung und Härtung und weist eine Mikrostruktur auf, in der Martensit dominant ist, bevorzugt mindestens 90 % Martensit aufweist, und die Festigkeit der Endkomponente ist größer als 1400 MPa (Rm). Andererseits ändert sich die Mikrostruktur der Schüssel (3) nicht und die Materialfestigkeit ist gleich etwa 700 MPa (Rm), insbesondere hauptsächlich in der Nabenflanschregion (5). Der Gehalt an Martensit in der Mikrostruktur der Schüssel (3) ist kleiner als 20 % (einschließlich 0 %).

Die Breite (W) des Rads (1) wird radial von einer innenseitigen Reifenwulstsitzregion zu einer außenseitigen Reifenwulstsitzregion gemessen, und der Durchmesser (D) wird radial von einer Reifenwulstsitzregion zu einer anderen Reifenwulstsitzregion gemessen, wie in Figur 1 gezeigt ist.

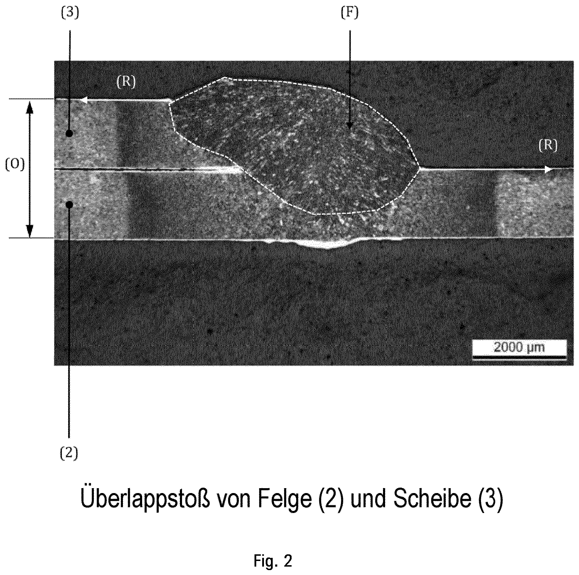

Figur 2 zeigt eine Mikrographie durch eine Füge- und Kontaktregion (A) zwischen der Felge (2) und der Schüssel (3). In dieser Ausführungsform sind die Schüssel (3) und die Felge (2) durch Verpressen und zusätzliches Lichtbogenschweißen (F) zusammengefügt. Das thermische Fügen der Schüssel (3) und der Felge (2) ist nicht auf Lichtbogenschweißen beschränkt; Laserschweißen, CMT-Schweißen, Laser-Hybrid-Schweißen und Hartlöten können auch verwendet werden, wobei allerdings eine kontrollierbare Fügetechnik mit einem geringen Wärmeeintrag bevorzugt wird. Somit kann auch Klebstoffverbinden verwendet werden, um die Spannungsverteilung gleichförmig zu machen und den Eintrag von mehr Wärme in die Radkomponenten zu vermeiden.

Schlüssel zu den Figuren:
1 Nutzfahrzeug-Stahlrad
2 Felge
3 Schüssel
4.1 Reifenwulstsitz (äußerer) der Felge
4.2 Reifenwulstsitz (innerer) der Felge
5 Reifennabenflansch (Verbindungsregion) der Schüssel
6 Felgenbett (Tiefbett-) Felge (mit (beispielsweise) 15 Grad Reifenwulstsitz)
7.1 Felgenhorn/kante (äußere/s)
7.2 Felgenhorn/kante (innerer/s)
8 Mittelloch der Schüssel
9 Bolzenlöcher des Nabenflansches
10 konische Region der Schüssel
11 Lüftungslöcher/Inspektionslöcher
D Raddurchmesser/Felgendurchmesser [mm]
W Radbreite/Felgenbreite [mm]
A Kontaktregion des Überdeckungsstoßes zwischen Schüssel und Felge [mm]
R Schweißregionsradius (involviert den Bereich von Schüssel und/oder Felge)
O Gesamtdicke des Überdeckungsstoßes der Kontaktregion
F Schweißregion, verursacht durch thermisches Fügen
T1 (maximale) Dicke der Schüssel (in der Nabenflanschregion) [mm]
T2 (minimale) Dicke der Schüssel (in der konischen oder Kontaktregion) [mm]
T3 (maximale) Dicke der Felge (am Felgenbett) [mm]

## Patentansprüche

1. Nutzfahrzeug-Stahlrad (1), das eine Felge (2) zum Montieren eines Reifens und eine Schüssel (3), die einen Nabenflansch (5) zum lösbaren Verbinden mit einer Radnabe aufweist, aufweist, wobei die Felge (2) und/oder die Schüssel (3) aus einem wärmebehandelten und gehärteten Stahlmaterial mit einem Kohlenstoffgehalt zwischen 0,18 Gew.-% und 0,37 Gew.-% hergestellt werden, und die Schüssel (3) und/oder die Felge (2) vorwiegend aus einer martensitischen Mikrostruktur bestehen und eine Zugfestigkeit von mindestens 900 MPa aufweisen, **dadurch gekennzeichnet, dass** die maximale Dicke (T3) der Felge (2) kleiner oder gleich 4,50 mm und/oder die maximale Dicke (T1) der Schüssel (3) kleiner oder gleich 12,00 mm ist, und der Wert des Produkts aus dem Raddurchmesser (D) und der Radbreite (W) geteilt durch die Radmasse größer als 4000 mm²/kg ist.

2. Nutzfahrzeug-Stahlrad nach Anspruch 1, **dadurch gekennzeichnet, dass** das Produkt aus der maximalen Dicke (T3) der Felge (2) und der maximalen Dicke (T1) der Schüssel (3) kleiner als 56 mm² ist.

3. Nutzfahrzeug-Stahlrad nach Anspruch 1 oder 2, **dadurch gekennzeichnet, dass** das Produkt aus der maximalen Dicke (T3) der Felge (2) und der minimalen Dicke (T2) der Schüssel (3) kleiner als 30 mm² ist.

4. Nutzfahrzeug-Stahlrad nach einem der vorhergehenden Ansprüche, **dadurch gekennzeichnet, dass** die Schüssel (3) und die Felge (2) verpresst sind und zusätzlich permanent durch Schweißen und/oder Klebstoffverbinden und/oder Hartlöten befestigt sind, wobei die Gesamtdicke (O) einer Kontaktregion (A) einer verpressten Fügeverbindung von allen Radkomponenten kleiner als 11,0 mm ist.

5. Nutzfahrzeug-Stahlrad nach einem der vorhergehenden Ansprüche, **dadurch gekennzeichnet, dass** sich eine zusätzliche erwärmte Region mit einem Radius (R) von 25 mm um eine Schweißregion (F) der Schüssel (3) und/oder der Felge (2) herum ergibt, und der Härtewert der Schüssel (3) und/oder der Felge (2) in der zusätzlich erwärmten Region auf weniger als 350 HV 0,1 abfällt.

6. Nutzfahrzeug-Stahlrad nach einem der vorhergehenden Ansprüche, **dadurch gekennzeichnet, dass** der Raddurchmesser (D) größer oder gleich 420 mm und/oder die Radbreite (W) größer oder gleich 175 mm ist.

7. Nutzfahrzeug-Stahlrad nach einem der vorhergehenden Ansprüche,
**dadurch gekennzeichnet, dass** der Wert des Produkts aus dem Raddurchmesser (D) und der Radbreite (W) geteilt durch die Radmasse größer als 4600 mm²/kg ist.

8. Nutzfahrzeug-Stahlrad nach einem der vorhergehenden Ansprüche, **dadurch gekennzeichnet, dass** der Raddurchmesser (D) zwischen 560 mm und 600 mm liegt.

9. Nutzfahrzeug-Stahlrad nach einem der vorhergehenden Ansprüche,
**dadurch gekennzeichnet, dass** die Radbreite (W) zwischen 200 mm und 300 mm liegt.

10. Nutzfahrzeug-Stahlrad nach einem der vorhergehenden Ansprüche,
**dadurch gekennzeichnet, dass** die mittlere Oberflächenrauhigkeit Ra der wärmebehandelten und gehärteten Schüssel (3) und/oder Felge (2) zwischen 0,8 µm und 1,8 µm liegt.

11. Nutzfahrzeug-Stahlrad nach einem der vorhergehenden Ansprüche, **dadurch gekennzeichnet, dass** ein Drück- oder Drückumformungsprozess verwendet wird zum Bilden der Schüssel (3) und/oder der Felge (2), die unterschiedliche Dicken aufweisen.

12. Nutzfahrzeug-Stahlrad nach einem der vorhergehenden Ansprüche,
**dadurch gekennzeichnet, dass** die Schüssel (3) ein Belüftungsloch oder Inspektionsloch (11) aufweist, so dass die Härte in der Nähe einer Kante des Inspektionslochs nicht unter eine Härte von weniger als 350 HV 0,1 fallen wird.

13. Nutzfahrzeug-Stahlrad nach einem der vorhergehenden Ansprüche, **dadurch gekennzeichnet, dass** die Felge (2) aus wärmebehandeltem und gehärtetem Stahl hergestellt ist, der vorwiegend aus einer martensitischen Mikrostruktur besteht und eine Zugfestigkeit von mindestens 900 MPa aufweist, wobei die Schüssel (3) aus einem anderen Stahlmaterial hergestellt ist, das ein kaltumgeformtes Stahlmaterial ist und keiner Wärmebehandlung und Härtung unterzogen wurde.

14. Nutzfahrzeug-Stahlrad nach einem der Ansprüche 1 - 12, **dadurch gekennzeichnet, dass** sowohl die Felge (2) als auch die Schüssel (3) aus wärmebehandeltem und gehärtetem Stahl hergestellt sind, und die Felge (2) und die Schüssel (3) vorwiegend aus einer martensitischen Mikrostruktur bestehen und eine Zugfestigkeit von mindestens 900 MPa aufweisen.
